# DEMANDE DE BREVET EUROPEEN

(11) **EP 1 055 827 A1**
(43) Date de publication de la demande: **29.11.2000**
(21) Numéro de dépôt: 00401336.3
(22) Date de dépôt: 16.05.2000
(51) Int. Cl.: F16B 5/07

(54) **Dispositif d'assemblage de plusieurs pièces sensiblement planes et pièce utilisée dans le dispositif**

(30) Priorité: 25.05.1999 FR 9906580
(71) Demandeur: Crouzet Automatismes, 26000 Valence (FR)
(72) Inventeur: Julien, Armand, Thomson-CSF Prop. Int. Dept. Brev., 94117 Arcueil Cédex (FR)
(74) Mandataire: Simonnet, Christine

(57) **Abrégé**

L'invention se rapporte à un dispositif d'assemblage de plusieurs pièces sensiblement planes. Le dispositif comporte des moyens de mise en position assemblée (2, 5) d'une pièce (1) de rang n dans l'empilage par rapport à une autre pièce (1) de rang n+1 voisine de la pièce (1) de rang n. Chaque pièce (1) comporte des moyens de verrouillage (7) de la position assemblée. Les moyens de verrouillage (7) de la pièce (1) de rang n peuvent être déplacés suivant un axe (4) par les moyens de verrouillage (7) de la pièce (1) de rang n+1 pour obtenir le verrouillage et par les moyens de verrouillage (7) de la pièce (1) de rang n-1 pour obtenir le déverrouillage. L'invention se rapporte également à une pièce utilisée dans le dispositif.

## Description

L'invention se rapporte à un dispositif d'assemblage de plusieurs pièces sensiblement planes et à une pièce utilisée dans le dispositif.

Pour assembler plusieurs pièces sensiblement planes, il est connu d'utiliser des moyens d'assemblage utilisant au moins une vis traversant de part en part les différentes pièces. Ces moyens d'assemblage connus présentent plusieurs inconvénients. Lorsqu'on souhaite démonter une des pièces, notamment une pièce n'étant pas située à une des extrémités de l'assemblage, on est tenu d'enlever la ou les vis, ce qui désolidarise l'ensemble des pièces et pas seulement celle qu'on souhaite démonter. Un autre inconvénient lié aux moyens connus est d'imposer la longueur de la ou des vis en fonction du nombre et de l'épaisseur des pièces à assembler. Lorsqu'on souhaite ajouter ou ôter une pièce à l'assemblage ou lorsqu'on souhaite remplacer une pièce d'une épaisseur donnée par une autre pièce d'épaisseur différente, on est tenu de changer de vis afin d'en adapter la longueur.

L'invention a pour but de pallier ces inconvénients en proposant un dispositif d'assemblage permettant d'améliorer la modularité de l'assemblage.

Pour atteindre ce but, l'invention a pour objet un dispositif d'assemblage de plusieurs pièces sensiblement planes et empilées, caractérisé en ce qu'il comporte des moyens de mise en position assemblée d'une pièce de rang n dans l'empilage par rapport à une autre pièce de rang n+1 voisine de la pièce de rang n, en ce que chaque pièce comporte des moyens de verrouillage de la position assemblée, et en ce que les moyens de verrouillage de la pièce de rang n peuvent être déplacés suivant un axe (4) par les moyens de verrouillage de la pièce de rang n+1 pour obtenir le verrouillage et par les moyens de verrouillage de la pièce de rang n-1 pour obtenir le déverrouillage.

L'invention à également pour objet une pièce sensiblement plane comportant des moyens de mise en position assemblée destinés à coopérer avec une seconde pièce, caractérisée en ce que la pièce comporte des moyens de verrouillage des moyens de mise en position, en ce que les moyens de verrouillage comportent une première surface de manoeuvre sur laquelle on appuie dans une première direction pour verrouiller les moyens de verrouillage et une seconde surface de manoeuvre sur laquelle on appuie dans une seconde direction, opposée à la première direction, pour déverrouiller les moyens de verrouillage, et en ce que les deux surfaces de manoeuvre sont espacées d'une distance, mesurée suivant un axe portant les deux directions, sensiblement égale à l'épaisseur de la pièce, l'épaisseur de la pièce ne comprenant pas les moyens de mise en position.

L'invention trouve une utilité particulière dans l'assemblage en batterie de distributeurs à air comprimé. Les distributeurs ont souvent une épaisseur standard, par exemple 8 mm ou 13 mm. Ils sont alimentés en air comprimé par un canal traversant l'ensemble des distributeurs perpendiculairement à leur plan d'assemblage.

L'invention permet en outre d'assurer un serrage suffisant des distributeurs entre eux afin d'assurer une compression suffisante d'un joint assurant l'étanchéité du canal d'air traversant les distributeurs, étanchéité assurée au niveau de chaque plan d'assemblage.

L'invention sera mieux comprise et d'autres avantages apparaîtront à la lecture de la description détaillée d'un mode de réalisation illustré par le dessin joint dans lequel :
- la figure 1 représente en coupe une pièce isolée ;
- la figure 2 représente en coupe trois pièces mises en positions les unes par rapport aux autres ;
- la figure 3 représente en coupe les trois pièces représentées à la figure 2, maintenues en positions les unes par rapport aux autres.

Par soucis de simplicité, dans les différentes figures, les mêmes repères topologiques représenteront les mêmes éléments.

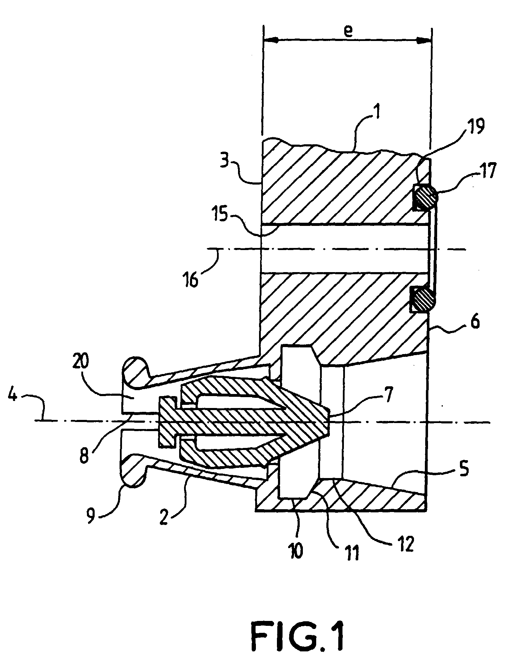

A la figure 1, on a représenté la coupe partielle d'une pièce 1 sensiblement plane et d'épaisseur e. La pièce 1 comporte une saillie 2 débordant d'une face 3 de la pièce 1. La saillie 2 est par exemple sensiblement de révolution autour d'un axe 4 perpendiculaire à la face 3. La saillie 2 est sensiblement conique. Le sommet du cône est situé à l'extérieur de la pièce 1 du côté de la face 3. La saillie 2 est destinée à pénétrer dans un creux situé dans une seconde pièce, non représentée figure 1. Ce creux est complémentaire de la forme conique de la saillie 2 de façon à assurer le positionnement de la pièce 3 par rapport à la seconde pièce. La saillie 2 et le creux forment des moyens de mise en position assemblée de la pièce 1 par rapport à la seconde pièce.

La seconde pièce peut être semblable à la pièce 2. C'est pourquoi un creux 5 a été représenté dans la pièce 1. Le creux 5 est réalisé dans une face 6 de la pièce 2. La face 6 est parallèle à la face 3. Les deux faces 3 et 6 sont distantes de l'épaisseur e. Le creux 5 est sensiblement conique et d'axe 4. Le creux 5 est complémentaire de la saillie 2. Il est destiné à recevoir une saillie semblable à la saillie 2 mais appartenant à une troisième pièce, non représentée figure 1.

Avantageusement, la saillie 2 comporte également un bourrelet 9 de forme par exemple torique et d'axe 4. Le bourrelet 9 est utilisé pour dépasser un point dur lorsqu'il pénètre dans un logement du creux 5 de la seconde pièce. Ce logement 10 est bien entendu représenté figure 1, dans le creux 5. Le logement 10 est sensiblement de révolution et d'axe 4. Le logement 10 à la forme d'un chambrage s'ouvrant sur le cône formant le creux 5 par une partie conique 11 dont la pente est inversée par rapport au cône formant le creux 5. La pente de la partie conique 11 et celle du cône formant le creux 5 sont définies de façon à régler les efforts d'insertion et d'extraction d'un bourrelet 9 appartenant à la troisième pièce. Une zone resserrée 12 forme l'intersection entre le cône formant le creux 5 et la partie conique 11. La zone resserrée forme le point dur 12 du creux 5. Le point dur 12 peut comporter une surface cylindrique d'axe 4.

Pour passer le point dur 12, la saillie 2 doit pouvoir se déformer élastiquement. Cette fonction est remplie au moyen d'une cavité 20 située à l'intérieur de la saillie 2 et débouchant à l'extérieur, du côté du sommet du cône formant la saillie 2. Les dimensions de la cavité 20 sont définies de façon à ce que l'épaisseur de la paroi de la saillie 2 puisse se déformer. En outre, la saillie 2 peut comporter une ou plusieurs fentes 8 contenant chacune l'axe 4. Ces fentes 8 contribuent à faciliter la déformation de la saillie 2.

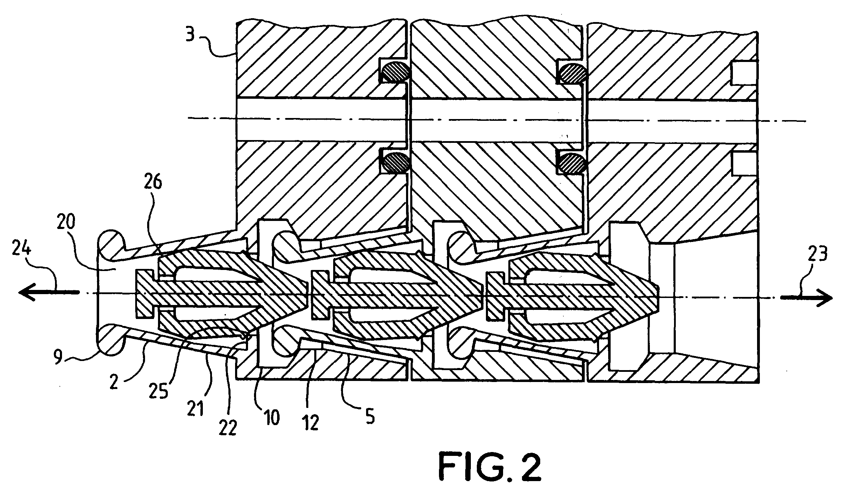

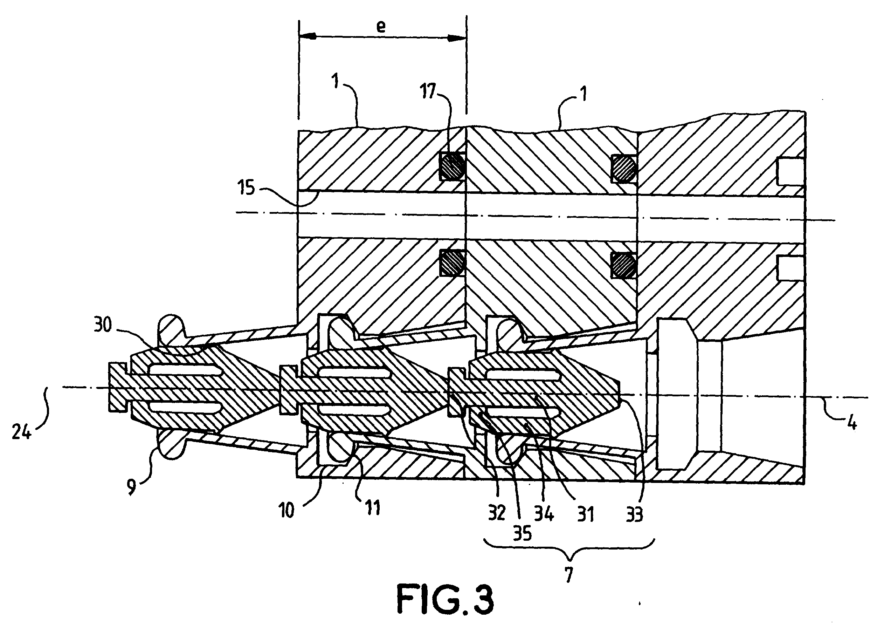

Par ailleurs lorsque la pièce 1 est un distributeur à air comprimé, elle peut comporter un trou 15 cylindrique d'axe 16. L'axe 16 est parallèle à l'axe 4. Le trou 15 traverse de part en part la pièce 1. Pour assurer la fonction distributeur d'air comprimé, on prélève de l'air comprimé au niveau du trou 15. Ce prélèvement n'est pas représenté figure 1. Ainsi lorsque plusieurs pièces semblables à la pièce 1 sont assemblées les unes aux autres, les différents trous 15 sont dans le prolongement les uns des autres pour permettre l'alimentation en air comprimé des différents distributeurs. On peut également prévoir un joint d'étanchéité 17 entre les différentes pièces. Ce joint d'étanchéité 17 est par exemple torique et il est logé dans une gorge 18 concentrique du trou 15. La gorge 18 est adaptée pour recevoir le joint d'étanchéité 17. La gorge 18 est réalisée dans une des faces 3 ou 6. Dans l'exemple représenté figure 1, la gorge 18 est réalisée dans la face 6. Ainsi lorsque plusieurs pièces 1 sont assemblées, la face 6 d'une pièce 1, comportant la gorge 18 et le joint d'étanchéité 17, sera en contact avec la face 3 d'une autre pièce 1 et le joint 17 évitera les pertes d'air comprimé au niveau des faces 3 et 6 en contact. La forme du bourrelet 9 et la forme du logement 10, notamment de sa partie conique 11 sont adaptés entre eux afin de permettre un effort suffisant pour écraser le joint d'étanchéité 17 lorsque plusieurs pièces 1 sont en contact et lorsqu'une tige 7 vient verrouiller la position des différentes pièces 1 entre elles. La forme de la tige 7 sera décrite ultérieurement au moyen des figures 2 et 3.

La figure 2 représente trois pièces 1 mise en place les unes par rapport aux autres. La saillie 2 de l'une pénétrant dans le creux 5 de la suivante. Les pièces 1 étant semblables et pour ne pas surcharger la figure, les repères topologiques ne sont portés que sur l'une des trois pièces 1. Il sera aisé pour le lecteur de transposer les repères aux deux autres pièces 1. A ce stade de l'assemblage, assemblage non verrouillé, la tige 7 n'a pas de fonction. Elle doit néanmoins laisser libre la déformation de la saillie 2 pour que le bourrelet 9 puisse passer le point dur 12 du creux 5 et pénétrer dans le logement 10 de la pièce 1 voisine.

A l'intérieur d'une des pièces 1, le creux 5 communique avec la cavité 20 située à l'intérieur de la saillie 2. La cavité 20 est, comme la face extérieure 21 de la saillie 2, sensiblement conique, de façon à ce que la saillie 2 forme un tronc de cône 21 d'épaisseur relativement fine pour permettre la déformation élastique de la saillie 2. Du côté de la saillie 2 qui n'est pas en contact avec la face 3, le tronc de cône 21 se termine par le bourrelet 9. La cavité 20 et le creux 5 contiennent la tige 7 susceptible de se déplacer sensiblement suivant l'axe 4. A l'intersection du logement 10 et de la cavité 20, la pièce 1 présente une butée 22 longitudinale afin d'empêcher la translation de la tige 7 en direction du creux 5. Cette direction est matérialisée sur la figure 2 par la flèche 23. La direction opposée est matérialisée par la flèche 24. Coopérant avec la butée 22, la tige 7 présente un épaulement 25, susceptible de s'appuyer contre la butée 22. Lorsque l'épaulement 25 est en appui contre la butée 22, la tige 7 laisse la possibilité à la saillie 2 de se déplacer à l'intérieur du creux 5 et de passer dans un sens ou dans l'autre du point dur 12.

La tige 7 est, comme la cavité 20, de révolution. Elle présente une face extérieure 26 qui peut par exemple être tronconique en partie ou en totalité. La face 26 est destinée à prendre appui contre la surface intérieure de la cavité 20 lorsque la tige 7 est poussée dans le sens de la flèche 24. On effectue une telle translation après avoir mis en position les différentes pièces 1 ensemble. Dans le mode de réalisation ici décrit la mise en position est obtenue lorsque le bourrelet 9 est situé à l'intérieur du logement 10 après avoir dépassé le point dur 12. La translation de la tige 7, dans le sens de la flèche 24, a pour effet d'empécher la déformation élastique de la saillie 2 en plaquant le bourrelet 9 au fond du logement 10. Ainsi le bourrelet 9 ne peut plus dépasser le point dur 12, ce qui entraîne le verrouillage en position de la saillie 2 dans le creux 5 d'une pièce 1 voisine. La tige 7 forme essentiellement des moyens de verrouillages de la pièce 1 en position assemblée.

Avantageusement, la tige 7 a une longueur, mesurée suivant l'axe 4, voisine de l'épaisseur e de la pièce 1 qui la contient. Ainsi lorsque plusieurs pièces 1 sont positionnées ensemble, on peut verrouiller leurs positions respectives en poussant, dans le sens de la flèche 24, la tige 7 située au plus près de la flèche 23. Dans sa translation, cette tige 7 entraîne les autres tiges 7 des autres pièces 1. Ceci permet de verrouiller simultanément toutes les pièces 1. Pour déverrouiller l'assemblage, il suffit de pousser, dans le sens de la flèche 23, la tige 7 située au plus près de la flèche 24.

Il est bien entendu possible de mettre en oeuvre l'invention même si les pièces 1 ont des épaisseurs différentes. Pour cela, il suffit que la longueur de la tige 7, mesurée suivant l'axe 4, soit sensiblement égale à l'épaisseur e de la pièce 1 qui contient la tige 7 considérée, et ceci pour chaque pièce 1 de l'assemblage.

La position verrouillée des tiges 7 est représentée figure 3. Les extrémités longitudinales des différentes tiges 7 sont en contact les unes avec les autres. Lorsque le bourrelet 9 d'une pièce 1 appuie contre la partie conique 11 du logement 10, d'une autre pièce 1, il entraîne les deux pièces 1 l'une vers l'autre de telle façon à ce que le joint torique 17 situé entre les deux pièces 1 soit compressé, afin d'assurer l'étanchéité au niveau de la jonction des deux trous 15 des deux pièces 1.

Avantageusement, la face extérieure 26 de la tige 7 comporte une zone cylindrique 30 d'axe 4 destinée à prendre appui contre la surface intérieure de la cavité 20, lorsque la tige 7 est poussée dans le sens de la flèche 24. Ainsi, même si la longueur de la tige 7, mesurée suivant l'axe 4, n'est pas rigoureusement égale à l'épaisseur e de la pièce 1, le point de contact entre la face extérieure 26 de la tige 7 et la surface intérieure de la cavité 20 peut se déplacer le long de la zone cylindrique 30 sans que ce déplacement influe sur l'effort radial que la tige 7 applique au bourrelet 9. Cela permet d'élargir les tolérances de fabrication de la pièce 1 et de sa tige 7 quant aux dimensions mesurées suivant l'axe 4.

Encore avantageusement, on peut donner de l'élasticité radiale à la face extérieure 26 de la tige 7. Cette élasticité permet de régler l'effort que la tige 7 applique au bourrelet 9. Pour réaliser cette élasticité, la tige 7 comporte par exemple une partie centrale 31 sensiblement cylindrique et massive de longueur e. C'est aux extrémités 32 et 33 de cette partie centrale 31 que la tige 7 peut s'appuyer contre les tiges 7 des pièces 1 voisines. La tige 7 comporte en outre une partie périphérique 34, sensiblement tubulaire et entourant la partie centrale 31. Le diamètre intérieur de la partie périphérique 34 est supérieur au diamètre extérieur de la partie centrale 31 de façon à laisser un jeu qui permet une flexion de la partie périphérique 34. La partie périphérique 34 est solidaire de la partie centrale 31 seulement au voisinage d'une des extrémités de la partie centrale 31, par exemple l'extrémité 33. De plus, on peut prévoir une butée 35 appartenant par exemple à la partie périphérique 34 et réduisant son diamètre intérieur. La butée 35 prendra appui contre la partie centrale 34 afin de limiter la déformation de la partie périphérique 34.

## Revendications

1. Dispositif d'assemblage de plusieurs pièces (1) sensiblement planes et empilées, caractérisé en ce qu'il comporte des moyens de mise en position assemblée (2, 5) d'une pièce (1) de rang n dans l'empilage par rapport à une autre pièce (1) de rang n+1 voisine de la pièce (1) de rang n, en ce que chaque pièce (1) comporte des moyens de verrouillage (7) de la position assemblée, et en ce que les moyens de verrouillage (7) de la pièce (1) de rang n peuvent être déplacés suivant un axe (4) par les moyens de verrouillage (7) de la pièce (1) de rang n+1 pour obtenir le verrouillage et par les moyens de verrouillage (7) de la pièce (1) de rang n-1 pour obtenir le déverrouillage.

2. Dispositif d'assemblage selon la revendication 1, caractérisé en ce que les moyens de mise en position assemblée (2, 5) comporte une saillie (2) réalisée dans la pièce (1) de rang n et un creux (5), complémentaire de la saillie (2), réalisé dans la pièce (1) de rang n+1.

3. Dispositif d'assemblage selon l'une des revendications précédentes, caractérisé en ce que les moyens de mise en position assemblée (2, 5) comportent une partie élastique (2) se déformant jusqu'à dépasser un point dur (12) lors de la mise en position des deux pièces (1).

4. Dispositif d'assemblage selon l'une des revendications précédentes, caractérisé en ce que les moyens de verrouillage (7) de la pièce (1) de rang n comportent une tige (7) de longueur mesurée suivant l'axe (4) de son déplacement sensiblement égale à l'épaisseur (e) de la pièce (1) de rang n, l'épaisseur (e) étant mesurée suivant l'axe (4) et ne comprenant pas la saillie (2).

5. Dispositif d'assemblage selon la revendication 4, caractérisé en ce que la tige (7), en position verrouillée, empêche la partie élastique (2) de se déformer en vue d'éviter le passage du point dur (12).

6. Dispositif d'assemblage selon la revendication 5, caractérisé en ce que la tige (7) comporte une zone (30) sensiblement cylindrique d'axe (4) porté par la direction de la translation de la tige (7), en ce que la zone (30) empêche la partie élastique (2) de se déformer.

7. Dispositif d'assemblage selon l'une quelconque des revendications 4 à 6, caractérisé en ce que la tige (7) comporte des moyens (34) lui assurant de l'élasticité radiale au niveau de son point de contact avec les moyens de mise en position assemblée (2).

8. Dispositif d'assemblage selon l'une des revendications précédentes, caractérisé en ce que lors du verrouillage, les différentes pièces (1) sont pressées les unes contres les autres.

9. Pièce (1) sensiblement plane comportant des moyens de mise en position (2) destinés à coopérer avec une seconde pièce (1), caractérisée en ce que la pièce (1) comporte des moyens de verrouillage (7) des moyens de mise en position (2), en ce que les moyens de verrouillage (7) comportent une première surface de manoeuvre (33) sur laquelle on appuie dans une première direction (24) pour verrouiller les moyens de verrouillage (7) et une seconde surface de manoeuvre (35) sur laquelle on appuie dans une seconde direction (23) opposée à la première direction (24) pour déverrouiller les moyens de verrouillage (7), et en ce que les deux surfaces de manoeuvre (33, 35) sont espacées d'une distance (e), mesurée suivant un axe (4) portant les deux directions (23, 24), sensiblement égale à l'épaisseur (e) de la pièce (1), l'épaisseur (e) de la pièce (1) ne comprenant pas les moyens de mise en position (2).

10. Pièce selon la revendication 9, caractérisé en ce que les moyens de mise en position assemblée (2, 5) comportent une saillie (2) réalisée dans la pièce (1).

11. Pièce selon l'une quelconque des revendications 9 et 10, caractérisée en ce que les moyens de mise en position assemblée (2, 5) comportent une partie élastique (2).

12. Pièce selon l'une quelconque des revendications 9 à 11, caractérisée en ce qu'en position verrouillée, les moyens de verrouillage (7) empêchent la partie élastique (2) de se déformer.

13. Pièce selon l'une quelconque des revendications 9 à 12, caractérisée en ce que les moyens de verrouillage (7) comportent une zone (30) sensiblement cylindrique d'axe (4) porté l'axe (4) portant les deux directions (23, 24) et en ce que la zone (30) empêche la partie élastique (2) de se déformer.

14. Pièce selon l'une quelconque des revendications 9 à 13, caractérisée en ce que les moyens de verrouillage (7) comportent des moyens (34) lui assurant de l'élasticité radiale au niveau de son point de contact avec les moyens de mise en position (2).
